# EUROPEAN PATENT APPLICATION

(11) **EP 2 402 065 A1**
(43) Date of publication of application: **04.01.2012**
(21) Application number: 09840832.1
(22) Date of filing: 22.10.2009
(51) Int. Cl.: A63F 13/00, A63F 13/10

(54) **GAME DEVICE, GAME DEVICE CONTROL METHOD, PROGRAM, AND INFORMATION STORAGE MEDIUM**

(30) Priority: 27.02.2009 JP 2009046598
(71) Applicant: Konami Digital Entertainment Co., Ltd., Tokyo 107-8324 (JP)
(72) Inventor: TANAKA, Tatsuya, Tokyo 107-8324 (JP)
(74) Representative: Winter, Brandl, Fürniss, Hübner, Röss, Kaiser, Polte - Partnerschaft
(86) International application number: PCT/JP2009/068207
(87) International publication number: WO 2010/097985

(57) **Abstract**

To provide a game device capable of realizing a user interface, in a game in which a game character acts based on first and second parameters set by a user game, the user interface for enabling a user to relatively readily set the first and second parameters. A display control unit (88) displays an image in which a first coordinate axis corresponding to the first parameter and a second coordinate axis corresponding to the second parameter are shown in a game screen image showing the game character acting based on the first parameter and the second parameter. A coordinate value obtaining unit (90) obtains a first coordinate value corresponding to the first coordinate axis and a second coordinate value corresponding to the second coordinate axis in accordance with a direction designation operation or a position designation operation. A parameter update unit (94) updates the first parameter and the second parameter, based on the first coordinate value and the second coordinate value.

## Description

### TECHNICAL FIELD

The present invention relates to a game device, a game device control method, a program, and an information storage medium.

### BACKGROUND ART

There is known a game device for carrying out a game in which a game character performs an action based on a plurality of parameters set by a user. In such a game, a user can control the content of action of a game character by setting a plurality of parameter values.

### Prior Art Document

### Patent Document

Patent Document 1: Japanese Patent Laid-open Publication No. 2003-000947

### DISCLOSURE OF THE INVENTION

### Problems to be Solved by the Invention

For the above described game device, there is a strong desire to realize a user interface for enabling a user to relatively readily set a plurality of parameters.

The present invention has been conceived in view of the above, and an object thereof is to provide a game device, a game device control method, a program, and an information storage medium for enabling a user to relatively readily set a plurality of first and second parameters in a game in which a game character acts based on the first and second parameters set by a user.

### Means for Solving the Problems

In order to solve the above described problem, a game device according to the present invention comprises a parameter storage unit for storing a first parameter and a second parameter, both parameters being a basis for action control of a game character; a display control unit for displaying an image in which a first coordinate axis corresponding to the first parameter and a second coordinate axis corresponding to the second parameter are shown in a game screen image showing the game character acting based on the first parameter and the second parameter; a coordinate value obtaining unit for obtaining a first coordinate value corresponding to the first coordinate axis and a second coordinate value corresponding to the second coordinate axis in accordance with a direction designation operation or a position designation operation; and a parameter update unit for updating the first parameter and the second parameter, based on the first coordinate value and the second coordinate value.

A game device control method according to the present invention comprises a step of reading content stored in a parameter storage unit for storing a first parameter and a second parameter, both parameters being a basis for action control of a game character; a display control step of displaying an image in which a first coordinate axis corresponding to the first parameter and a second coordinate axis corresponding to the second parameter are shown in a game screen image showing the game character acting based on the first parameter and the second parameter; a coordinate value obtaining step of obtaining a first coordinate value corresponding to the first coordinate axis and a second coordinate value corresponding to the second coordinate axis in accordance with a direction designation operation or a position designation operation; and a parameter update step of updating the first parameter and the second parameter, based on the first coordinate value and the second coordinate value.

A program according to the present invention is a program for causing a computer to function as a unit for reading content stored in a parameter storage unit for storing a first parameter and a second parameter, both parameters being a basis for action control of a game character; a display control unit for displaying an image in which a first coordinate axis corresponding to the first parameter and a second coordinate axis corresponding to the second parameter are shown in a game screen image showing the game character acting based on the first parameter and the second parameter; a coordinate value obtaining unit for obtaining a first coordinate value corresponding to the first coordinate axis and a second coordinate value corresponding to the second coordinate axis in accordance with a direction designation operation or a position designation operation; and a parameter update unit for updating the first parameter and the second parameter, based on the first coordinate value and the second coordinate value.

An information storage medium according to the present invention is a computer readable information storage medium storing the above described program.

According to the present invention, it is possible to realize, in a game in which a game character acts based on first and second parameters set by a user, a user interface for enabling a user to relatively readily set the first and second parameters.

According to one aspect of the present invention, the game device may further comprise a unit for limiting a range/ranges of the first coordinate value or/and the second coordinate value which is/are possibly obtained by the coordinate value obtaining unit, based on current game situation.

According to one aspect of the present invention, the coordinate value obtaining unit may include a unit for changing the first coordinate value and the second coordinate value of a reference position defined in the image, based on a direction designation operation, and may obtain the first coordinate value and the second coordinate value of the reference position.

According to this aspect, the display control unit may include a unit for displaying a guide image for indicating the reference position in a position based on the reference position, and a unit for changing a manner of displaying the guide image, based on at least one of the first coordinate value and the second coordinate position of the reference position.

According to this aspect, the guide image may include a plurality of element images, and the display control unit may include a unit for changing a distance between the plurality of element images, based on at least one of the first coordinate value and the second coordinate value of the reference position.

According to one aspect of the present invention, the game device may further comprise a touch panel for outputting position information in accordance with a press operation, wherein the coordinate value obtaining unit may include a unit, when a position specified by the position information output from the touch panel is included in the image, for obtaining the first coordinate value and the second coordinate value of the position specified by the position information.

According to one aspect of the present invention, the game device may further comprise a coordinate axis setting unit for selecting at least one of the first parameter to be correlated to the first coordinate axis and the second parameter to be correlated to the second coordinate axis, based on a selection operation, from among a plurality of parameters.

According to one aspect of the present invention, the game device may further comprise a coordinate axis setting unit for selecting at least one of the first parameter to be correlated to the first coordinate axis and the second parameter to be correlated to the second coordinate axis, based on a current situation of a game, from among a plurality of parameters.

According to one aspect of the present invention, a game imitating a sport match between an operating team operated by a user and an opponent team may be carried out, action of at least one or more of player characters belonging to the operating team may be controlled based on the first parameter and the second parameter, and the display control unit may include a unit for determining whether or not a player character satisfying a predetermined condition among the player characters belonging to the operating team is participating in the match, and limit display of the image, based on a result of determination.

According to one aspect of the present invention, a game imitating a sport match between an operating team operated by a user and an opponent team may be carried out, action of at least one or more of player characters belonging to the operating team may be controlled based on the first parameter and the second parameter, and the game device may further comprise a unit for determining whether or not a player character satisfying a predetermined condition among the player characters belonging to the operating team is participating in the match, and a unit for limiting a range/ranges of the first coordinate value or/and the second coordinate value which is/are possibly obtained by the coordinate value obtaining unit, based on a result of determination.

### BRIEF DESCRIPTION OF THE DRAWINGS

Fig. 1 is a diagram showing a hardware structure of a game device according to an embodiment of the present invention;
Fig. 2 is a diagram showing one example of a game device;
Fig. 3 is a diagram showing one example of a game screen image;
Fig. 4 is an enlarged diagram of a strategy parameter image;
Fig. 5 is a diagram explaining one example of change in manner of displaying a cursor image;
Fig. 6 is a diagram explaining one example of change in manner of displaying a cursor image;
Fig. 7 is a diagram explaining one example of limitation of a movable area of a cursor image;
Fig. 8 is a diagram explaining one example of limitation of a movable area of a cursor image;
Fig. 9 is a diagram explaining one example of limitation of a movable area of a cursor image;
Fig. 10 is a diagram explaining one example of limitation of a movable area of a cursor image;
Fig. 11 is a functional block diagram of a game device according to an embodiment of the present invention;
Fig. 12 is a diagram showing one example of player condition data;
Fig. 13 is a diagram showing one example of player ability parameter data;
Fig. 14 is a diagram showing one example of strategy parameter data;
Fig. 15 is a flowchart showing one example of a process to be carried out in the game device;
Fig. 16 is a flowchart showing one example of a process to be carried out in the game device;
Fig. 17 is a diagram showing one example of a movable area data of a cursor image;
Fig. 18 is a diagram showing one example of a movable area data of a cursor image;
Fig. 19 is a diagram showing one example of a movable area data of a cursor image;
Fig. 20 is a diagram showing one example of a movable area data of a cursor image;
Fig. 21 is a functional block diagram of a game device according to another embodiment of the present invention; and
Fig. 22 is a diagram showing one example of coordinate axis data.

### BEST MODE FOR CARRYING OUT THE INVENTION

In the following, one example of an embodiment of the present invention will be described in detail with reference to the accompanying drawings. A game device according to an embodiment of the present invention is realized using, e.g., a consumer game device (an installed type game device), a portable game device, a portable phone, a personal digital assistant (PDA), a personal computer, or the like. Here, a case in which a game device according to an embodiment of the present invention is realized using a consumer game device will be described.

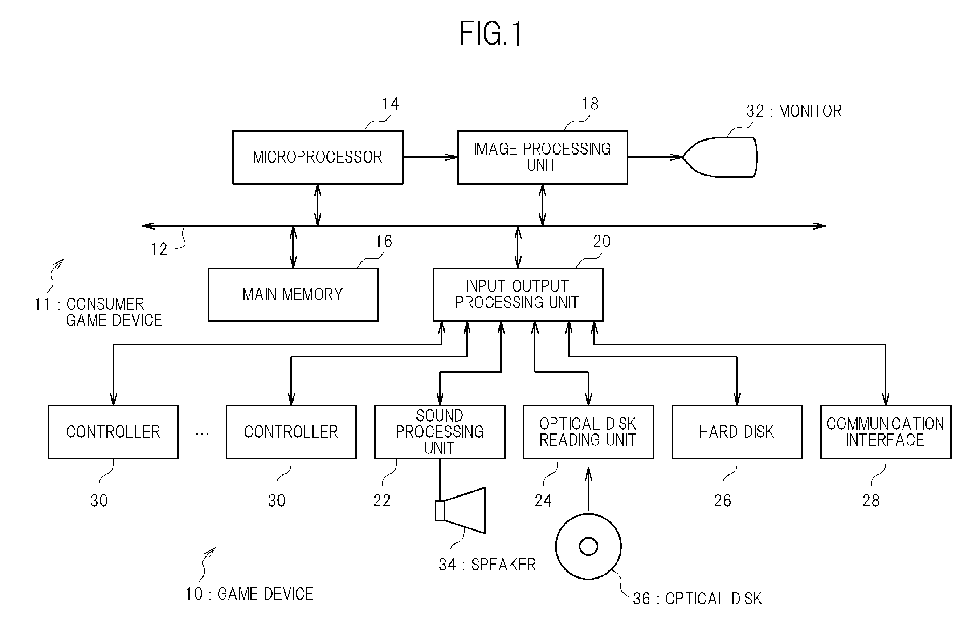

Fig. 1 is a diagram showing a hardware structure of a game device according to an embodiment of the present invention. The game device 10 shown in Fig. 1 comprises a consumer game device 11, a monitor 32 (display unit), a speaker 34 (sound output unit), and an optical disk 36 (information storage medium). The monitor 32 (display unit) and the speaker 34 (sound output unit) are connected to the consumer game device 11. As the monitor 32, e . g. , a home-use television set receiver is used; as the speaker 34, e.g., a speaker built in to a home-use television set receiver is used.

The consumer game device 11 is a publicly known computer game system. The consumer game device 11 comprises a bus 12, a microprocessor 14, a main memory 16, an image processing unit 18, an input output processing unit 20, a sound processing unit 22, an optical disk reading unit 24, a hard disk 26, a communication interface 28, and a controller 30. Structural elements other than the controller 30 are accommodated in an enclosure of the consumer game device 11.

The microprocessor 14 carries out various information processes, based on an operating system stored in a ROM (not shown) and a program read from the optical disk 36. The main memory 16 comprises, e.g., a RAM. A program and data read from the optical disk 36 are written into the main memory 16 when necessary. The main memory 16 is also used as a working memory of the microprocessor 14. The bus 12 is used to exchange addresses and data among the respective units of the consumer game device 11.

The image processing unit 18 includes a VRAM, and renders a game screen image into the VRAM, based on the image data sent from the microprocessor 14. The game screen image rendered in the VRAM is converted into a video signal and output to the monitor 32 at a predetermined time.

The input output processing unit 20 is an interface via which the microprocessor 14 accesses the sound processing unit 22, the optical disk reading unit 24, the hard disk 26, the communication interface 28, and the controller 30. The sound processing unit 22 has a sound buffer, and outputs various sound data read from the optical disk 36 into the sound buffer via the speaker 34. The communication interface 28 is an interface for connecting the consumer game device 11 by wire or radio to a communication network, such as the Internet, or the like.

The optical disk reading unit 24 reads a program and data recorded on the optical disk 36. Although the optical disk 36 is used here to provide a program and data to the consumer game device 11, any other information storage medium, such as a memory card, or the like, may be used instead. Alternatively, a program and data may be supplied via a communication network, such as the Internet or the like, from a remote place to the consumer game device 11. The hard disk 26 is a typical hard disk device (an auxiliary memory device). Note that the program and data which are described here as being recorded on the optical disk 36 may be stored in the hard disk 26 instead.

The controller 30 is a general purpose operation means for receiving game operation. The controller 30 comprises a direction designating button, a plurality of operation sticks (operating lever), and a plurality of operation buttons. The input output processing unit 20 scans the state of respective operating members of the controller 30 every constant period (e.g., every 1/60^{th} of a second) and forwards an operation signal describing a scanning result to the microprocessor 14 via the bus 12, so that the microprocessor 14 determines a game operation carried out by a user, based on the operation signal. Note that a plurality of controllers 30 can be connected by wire or radio to the consumer game device 11.

In the game device 10, e.g., a soccer game imitating a soccer game between an operating team to be operated by a user and an opponent team to be operated by a computer is carried out. This soccer game is realized by executing a program read from the optical disk 36. Alternatively, the opponent team may be operated by another user.

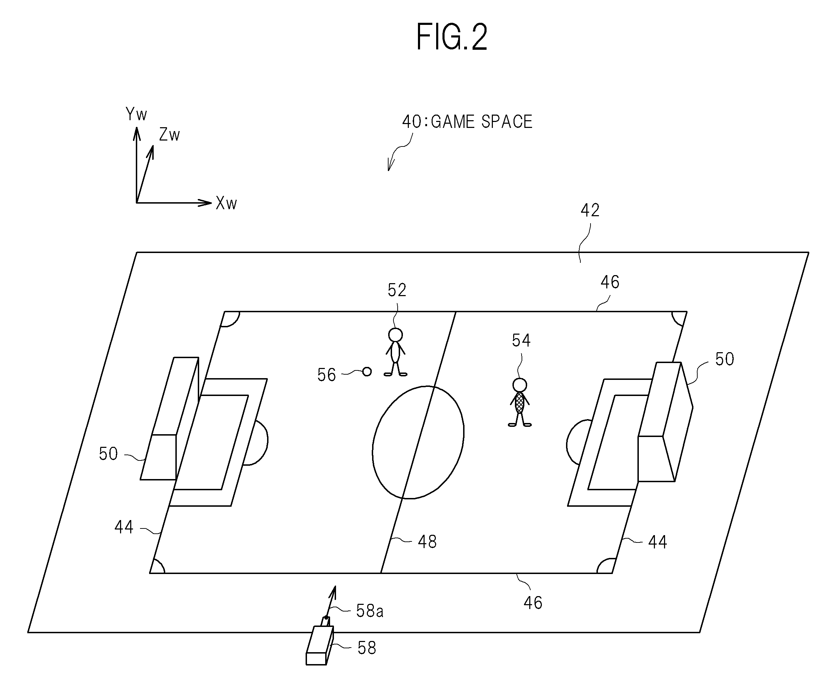

A game space is created in the main memory 16 of the game device 10. Fig. 2 shows one example of the game space. The game space 40 shown in Fig. 2 is a virtual three-dimensional space. As shown in Fig. 2, a field 42, or an object representing a soccer field, is placed in the game space 40, and a goal line 44, a touch line 46, a half-way line 48, and so forth, are shown on the field 42.

Further, a goal 50, or an object representing a soccer goal, a player character 52, or an object representing a soccer player belonging to the operating team and participating in a match, a player character 54, or an object representing a soccer player belonging to the opponent team and participating in a match, and a ball 56, or an object representing a soccer ball, are also placed on the field 42.

One of the goals 64 is correlated to the operating team, while the other goal 64 is correlated to the opponent team. With the ball 56 having moved into a goal correlated to either team, a score event occurs to the other team.

Although not shown in Fig. 2, eleven player characters 52 belonging to the operating team and eleven player characters 54 belonging to the opponent team are placed on the field 42. Note that when a player character 52 (54) and the ball 56 get closer to each other, the player character 52 (54) and the ball 56 are made correlated to each other under a predetermined condition. In this case, the movement action of the player character 52 (54) is a dribble action. In the following, a situation in which the ball 56 is correlated to a player character 52 (54) will be described as "a player character 52 (54) holding the ball 56".

A virtual camera 58 (viewpoint) is set in the virtual game space 40. A game screen image showing a picture obtained by viewing the game space 40 from the virtual camera 58 is displayed on the monitor 32. For example, the virtual camera 58 moves in the game space 40, based on the position of the ball 56, such that the ball 56 is always shown in a game screen image.

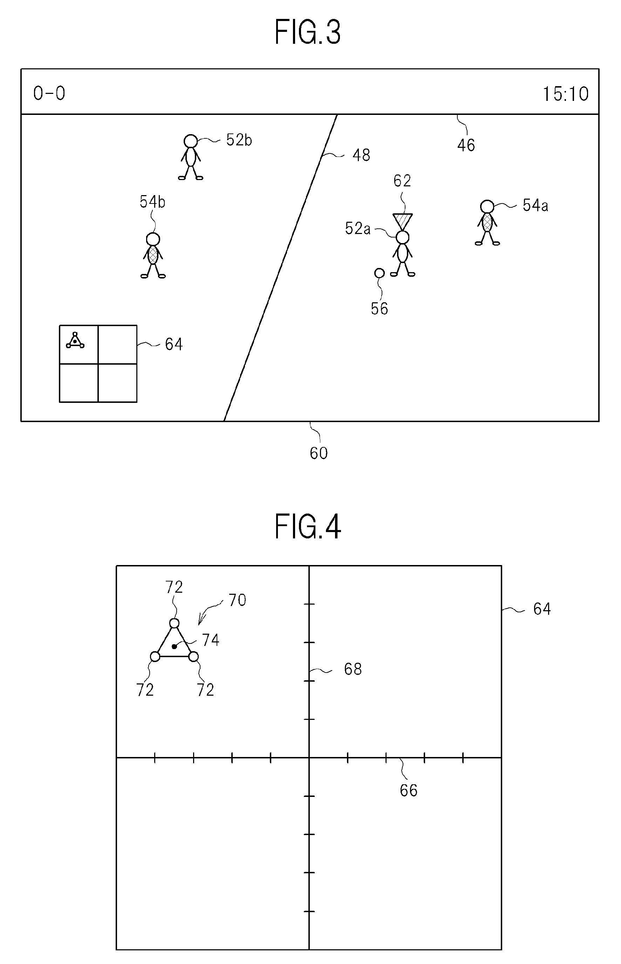

Fig. 3 shows one example of a game screen image. In the game screen image 60 shown in Fig. 3, player characters 52a, 52b belonging to the operating team and player characters 54a, 54b belonging to the opponent team are shown.

In the game screen image 60 shown in Fig. 3, a triangular mark 62 is shown above the head of the player character 52a. In this embodiment, any of the player characters 52 belonging to the operating team is set as a user's operation target, and the mark 62 indicates a player character 52 set as a user' s current operation target. That is, the player character 52a is set as a user's operation target in the situation shown in Fig. 3.

A player character 52 set as a user's operation target acts based on an operation by a user. For example, a player character 52 set as a user's operation target moves based on a direction designation operation made using a first operating member (a first operating stick here) provided on the controller 30. Note that a player character 52 (hereinafter referred to as a "teammate player character") not set as a user's operation target among the player characters 52 belonging to the operating team acts according to an action control algorithm.

In the game screen image 60 shown in Fig. 3, a strategy parameter image 64 is shown. A strategy parameter image 64 serves to present the content of the currently set strategy parameter and also to receive change to the content of the strategy parameter.

In the following, a strategy parameter will be described. A strategy parameter is a parameter concerning a strategy of the operating team, and is used as a base for action control of a teammate player character. A strategy parameter includes, e.g., the parameters below.
(1) "pressing" parameter
(2) "defense line" parameter

A "pressing" parameter is a parameter showing how aggressively so-called press defense is carried out. A "press defense" is a defense action of getting closer to a player character 54 holding a ball 56 to pressure the player character 54 holding the ball 56. A "pressing" parameter takes a value, e.g., between -5 and +5. The higher the "pressing" parameter value is, the more aggressively a teammate player character carries out press defense. In other words, the lower the "pressing" parameter value is, the less aggressively a teammate player character carries out press defense.

A "defense line" parameter is a parameter indicating how far away from the goal line a so-called defense line is formed. A "defense line" is a virtual line drawn parallel to the goal line 44 and passing through the position of a defender located closest to the goal 50 to be defended by the operation team, among the defenders (DF) belonging to the operating team; and "to set a defense line farther away from the goal line" means that defender player characters 52 belonging to the operating team move farther away from the goal 50 to defend. A "defense line" parameter also takes a value, e.g., between -5 and +5. The higher the "defense line" parameter value is, the farther away from the goal line the defense line is formed. That is, the defender player characters 52 belonging to the operating team carry out defense in a position far away from the goal 50 being defended.

In the following, the strategy parameter image 64 will be described in detail. Fig. 4 is an enlarged view of the strategy parameter image 64. As shown in Fig. 4, the strategy parameter image 64 includes a first coordinate axis 66 extending in a first direction (lateral direction) and a second coordinate axis 68 extending in a second direction (vertical direction), both vertically intersecting each other at a position corresponding to a neutral position of the respective coordinate axes. The first coordinate axis 66 is correlated to the "pressing" parameter, while the second coordinate axis 68 is correlated to the "defense line" parameter.

A cursor image 70 is shown in the strategy parameter image 64. The cursor image 70 is an image of an equilateral triangle having a circle image 72 placed on each vertex.

The cursor image 70 serves to describe the content of the currently set "pressing" and "defense line" parameters. That is, the coordinate value of the central point (barycentral point) 74 of the cursor image 70, corresponding to the first coordinate axis 66 (hereinafter referred to as a "first coordinate value") is set to a coordinate value corresponding to the current value of the "pressing" parameter. Similarly, the coordinate value of the central point 74 of the cursor image 70, corresponding to the second coordinate axis 68 (hereinafter referred to as a "second coordinate value") is set to a coordinate value corresponding to the current value of the "defense line" parameter.

The first coordinate axis 66 is defined with the right direction corresponding to a positive direction, and a larger first coordinate value means a higher "pressing" parameter value. That is, a cursor image 70 located on the right side in the strategy parameter image 64 means a relatively high "pressing" parameter value, while a cursor image 70 located on the left side in the strategy parameter image 64 means a relatively low "pressing" parameter value.

The second coordinate axis 68 is defined with the upper direction corresponding to a positive direction, and a larger second coordinate value means a higher "defense line" parameter value. That is, a cursor image 70 located on the upper side in the strategy parameter image 64 means a relatively high "defense line" parameter value, while a cursor image 70 located on the lower side in the strategy parameter image 64 means a relatively low "defense line" parameter value.

As described above, as the strategy parameter image 64 and the cursor image 70 are shown in a game screen image 60 in the game device 10, a user, while operating a player character 52 set as an operation target, can know the content of the currently set "pressing" and "defense line" parameters by referring to the position of the cursor image 70.

Note that the cursor image 70 also serves to make it possible for a user to change the content of the "pressing" and "defense line" parameters set.

That is, the cursor image 70 moves in the strategy parameter image 64, based on a direction designation operation carried out using a second operating member (a second operating stick here) provided on the controller 30. With the cursor image 70 having moved, the "pressing" parameter is updated to a value corresponding to the first coordinate value of the central point 74 of the cursor image 70 having moved, while the "defense line" parameter is updated to a value corresponding to the second coordinate value of the central point 74 of the cursor image 70 having moved.

In this manner, a user, while operating a player character 52 set as an operation target, using the first operating stick, can change the "pressing" and "defense line" parameter values by changing the position of the cursor image 70, using the second operating stick in the game device 10.

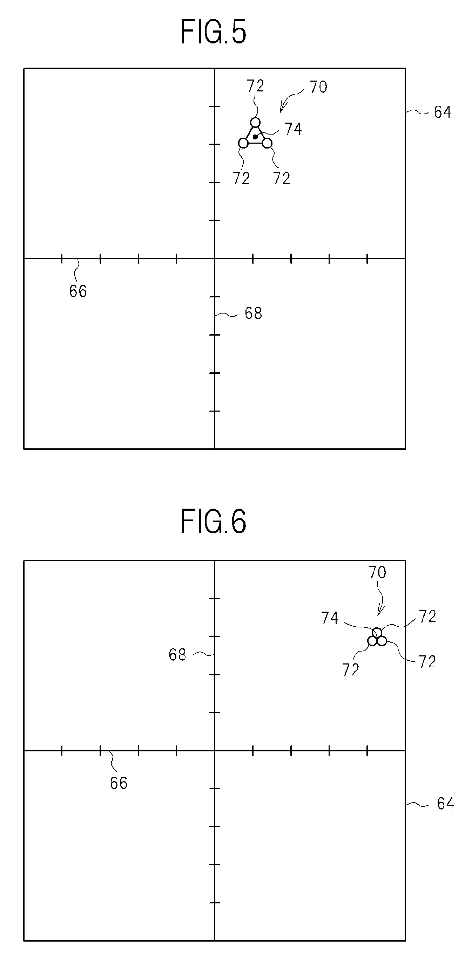

Further, the cursor image 70 is displayed in a different manner depending on the position of the cursor image 70 in the game device 10. Figs. 5 and 6 are diagrams explaining one example of change in manner of displaying the cursor image 70. As shown in Figs. 5 and 6, as the first coordinate value of the cursor image 70 (central point 74) becomes larger, the distance between the circle images 72 becomes shorter, and the entire size of the cursor image 70 becomes accordingly smaller.

As described above, for a cursor image 70 having a larger first coordinate value, a higher "pressing" parameter value results, and a teammate player character carries out aggressive press defense. Regarding this point, the circle images 72 of a cursor image 70 having a larger first coordinate value are located closer to each other in the game device 10. This makes it possible for a user to instantly know that a teammate player character is performing aggressive press defense by getting closer to a player character 54 belonging to the opponent team to apply pressure.

Meanwhile, for a cursor image 70 having a smaller first coordinate value, a lower "pressing" parameter value results, and a teammate player character carries out zone defense. Regarding this point, the circle images 72 of a cursor image 70 having a smaller first coordinate value are located far apart from each other in the game device 10. This makes it possible for a user to instantly know that a teammate player character is performing zone defense by defending while keeping a distance from a player character 54 belonging to the opponent team.

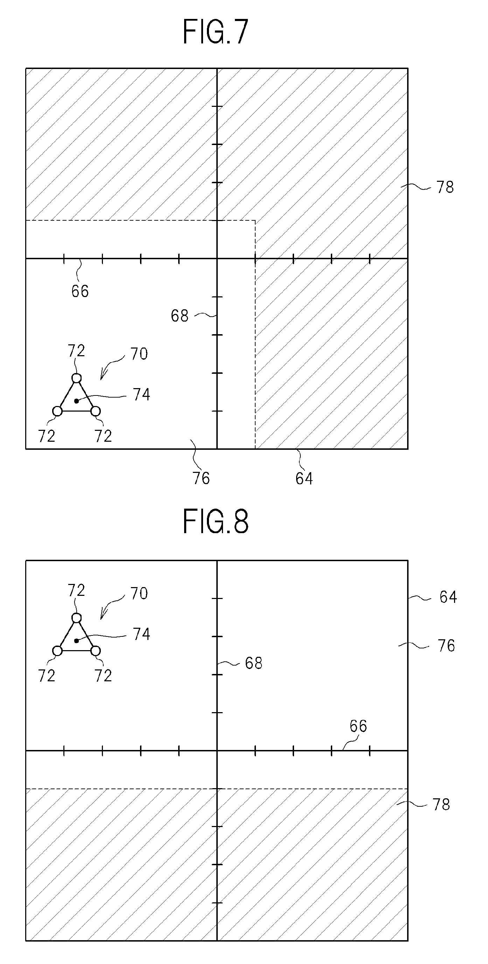

Further, an area where the cursor image 70 can move (movable area) is limited based on the current game situation in the game device 10. Figs. 7 to 9 are diagrams explaining an example of limitation of a movable area of the cursor image 70. Note that in Figs. 7 to 9, the reference numeral 76 indicates a movable area of the cursor image 70, and the reference numeral 78 (diagonally lined area) indicates an area where the cursor image 70 cannot move (immovable area). As shown in Figs. 7 to 9, the movable area 76 and the immovable area 78 are distinctively displayed.

Fig. 7 shows one example of a strategy parameter image 64 to be shown when the operation team has a lower physical strength parameter value. A physical strength parameter of an operating team is a parameter concerning remaining physical strength of a player character 52 belonging to the operating team and participating in a match, and e.g., a higher physical strength parameter value of the operating team means more physical strength remaining in a player character 52 belonging to the operating team and participating in a match. Action ability (e. g., a moving speed, a response speed) of a player character 52 decreases based on the physical strength parameter value. That is, the action ability of a player character 52 is lower when the physical strength parameter value is lower, compared to that when a physical strength parameter value is higher.

As shown in Fig. 7, when the physical strength parameter value of the operating team becomes lower, an area having relatively large first and second coordinate values is set as an immovable area 78. This makes it unable to set relatively high "pressing" and "defense line" parameter values. As a result, "performance of aggressive press defense" and "formation of a defense line farther away from the goal line", which consumes a larger amount of physical strength, cannot be achieved.

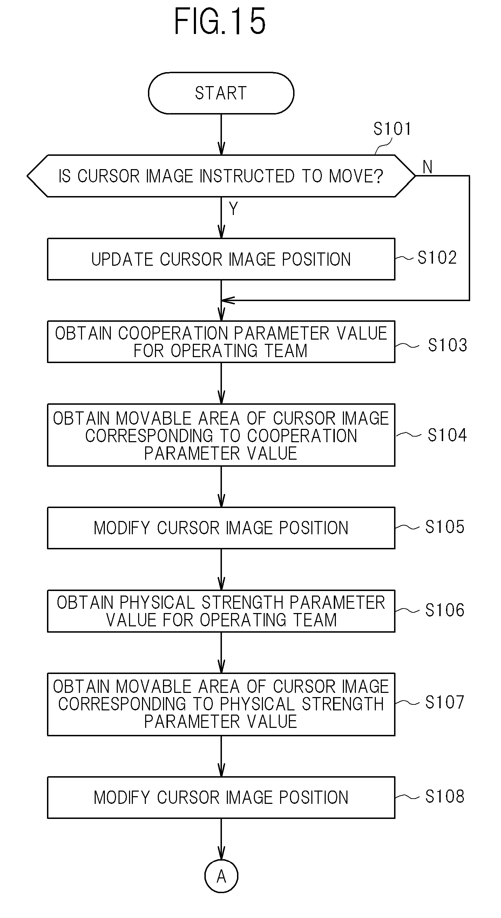

When a physical strength parameter value of the operating team becomes lower and accordingly, the movable area 76 becomes smaller (that is, the immovable area 78 becomes larger) to an extent that the cursor image 70 is resultantly located in the immovable area 78, the cursor image 70 is forcibly moved to the movable area 76 (see S108 in Fig. 15 to be described later).

Then, for example, when players are exchanged in the situation shown in Fig. 7 so that a player character 52 having larger physical strength remaining joins the match, the boundary between the movable area 76 and the immovable area 78 moves in the positive direction of the first coordinate axis 66 and the second coordinate axis 68. This makes it possible to set relatively high "pressing" and "defense line" parameter values.

Fig. 8 shows one example of the strategy parameter image 64 to be shown in a situation in which the operating team is required to make aggressive attack. A "situation in which the operating team is required to make aggressive attack" may be a situation in which, e.g., only a short period of time is left for the match and the score of the operating team is smaller than that of the opponent team.

As shown in Fig. 8, in a situation in which the operating team is required to make aggressive attack, an area having a relatively small second coordinate value is set as an immovable area 78. This makes it impossible to set a relatively low "defense line" parameter value, and the "defense line" parameter value must be set relatively high. That is, a defense line must be formed in a position relatively farther away from the goal line.

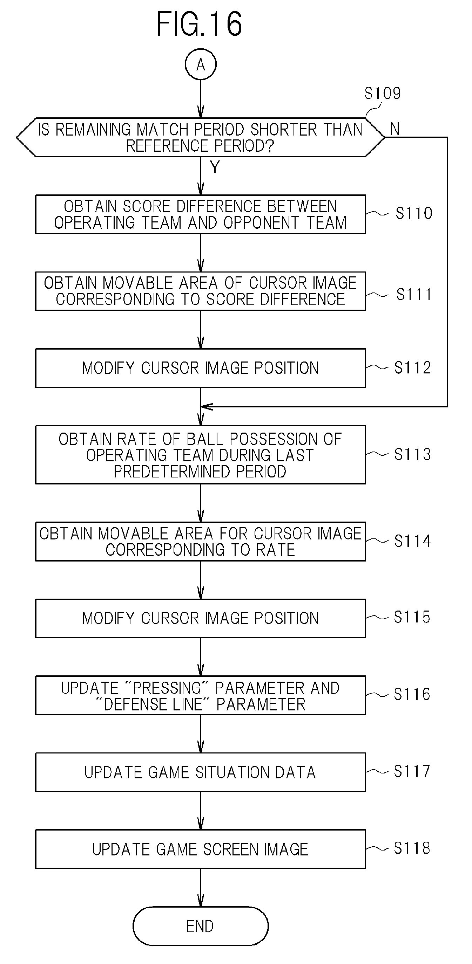

When a situation in which the operating team is required to make aggressive attack results and accordingly the movable area 76 becomes smaller (that is, the immovable area 78 becomes larger) to an extent that the cursor image 70 is resultantly located in the immovable area 78, the cursor image 70 is forcibly moved to the movable area 76 (see S112 in Fig. 16 to be described later).

Then, when the operating team makes a score and the score of the operating team becomes equal to that of the opponent team in the situation shown in Fig. 8, the boundary between the movable area 76 and the immovable area 78 moves in the negative direction of the second coordinate axis 68. This makes it possible to set a relatively low "defense line" parameter value.

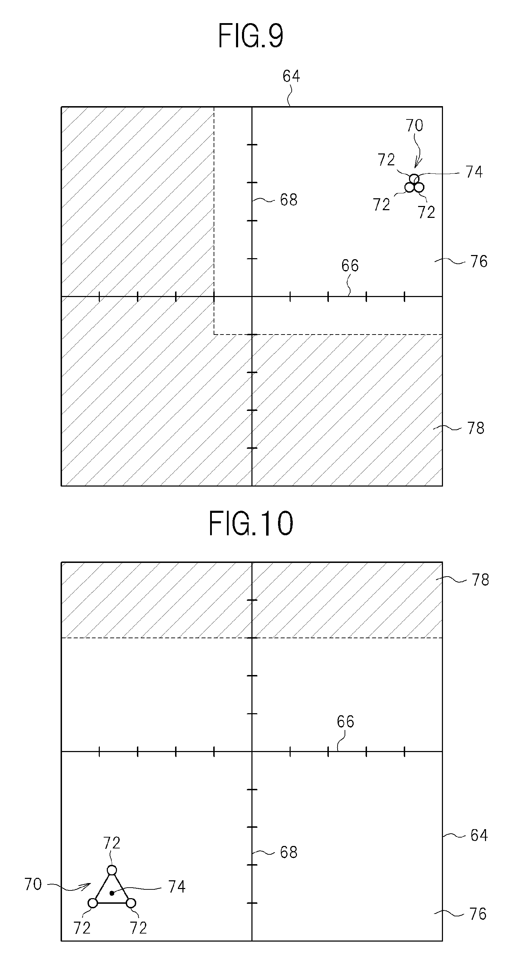

Fig. 9 shows one example of the strategy parameter image 64 to be shown when the operating team has a low rate of ball possession during the last predetermined period (e.g. two minutes). A ball holding period of an operating team refers to an accumulated period of time in which a player character 52 belonging to the operating team holds the ball 69.

As shown in Fig. 9, when the ball holding period of the operating team during the last predetermined period is low, an area having at least one of the first and second coordinate values being relatively small is defined as an immovable area 78. This makes it impossible to set relatively low "pressing" and "defense line" parameter values, and the "pressing" and "defense line" parameter values must be set relatively high. Accordingly, relatively aggressive press defense is carried out, and a defense line must be formed in a position relatively farther away from the goal line.

Note that when the ball holding period of the operating team during the last predetermined period becomes lower, and accordingly the movable area 76 becomes smaller (that is, the immovable area 78 becomes larger) to an extent that the cursor image 70 is located in the immovable area 78, the cursor image 70 is forcibly moved into the movable area 76 (see S115 in Fig. 16 to be described later) .

Then, when the ball holding period of the operating team during the last predetermined period becomes higher in the situation shown in Fig. 9, the boundary between the movable area 76 and the immovable area 78 moves in the negative direction of the first coordinate axis 66 and the second coordinate axis 68. This makes it possible to set relatively low "pressing" and "defense line" parameter values.

As described above, the movable area 76 and immovable area 78 of the cursor image 70 will change according to change in current situation of the ongoing game in the game device 10. Therefore, a user interface which requires a user to set the "pressing" and "defense line" parameter values with consideration of the current game situation is realized in the game device 10.

Further, the movable area 76 of the cursor image 70 is limited depending on the ability of the operating team (in other words, player characters 52 belonging to the operating team) in the game device 10. Fig. 10 is a diagram explaining one example of limitation of the movable area 76 of the cursor image 70.

Fig. 10 shows one example of the strategy parameter image 64 to be shown when the operation team has a relatively low cooperation degree. Note that a cooperation degree of an operating team indicates how smoothly a player characters 52 belonging to the operating team and participating in a match can carry out a cooperative action (cooperative play).

As shown in Fig. 10, for a relatively low cooperative degree with the operating team, an area having a relatively large second coordinate value is set as an immovable area 78. This makes it impossible to set a high "defense line" parameter value. As a result, a defense line cannot be formed in a position relatively farther away from the goal line.

Then, when, e.g., players are exchanged in the situation shown in Fig. 10 so that a different player character 52 from that which has been participated in a match so far now participates in the match, and accordingly the cooperation degree of the operating team becomes higher, the boundary between the movable area 76 and the immovable area 78 moves in the positive direction of the second coordinate axis 68. This makes it possible to set a high "defense line" parameter value.

As described above, the movable area 76 and immovable area 78 of the cursor image 70 will change depending on the ability (cooperation degree) of the operating team in the game device 10. Therefore, a user interface which requires a user to set the "pressing" and "defense line" parameter values with consideration of the ability (cooperation degree) of the operating team is realized in the game device 10.

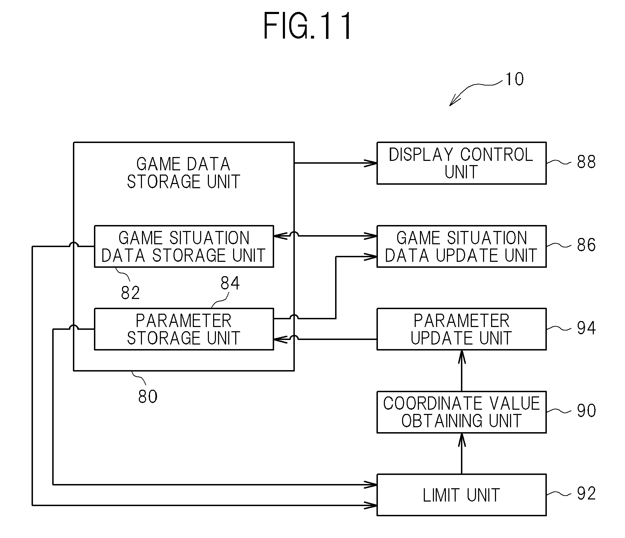

Fig. 11 is a functional block diagram showing functions realized in the game device 10. As shown in Fig. 11, the game device 10 functionally comprises a game data storage unit 80, a game situation data update unit 86, a display control unit 88, a coordinate value obtaining unit 90, a limit unit 92, and a parameter update unit 94. The game data storage unit 80 is realized using, e.g., the main memory 16 and the optical disk 36, and the other function blocks are realized by executing the program read from the optical disk 36 by the microprocessor 14.

The game data storage unit 80 stores data necessary for realizing a soccer game, and comprises a game situation data storage unit 82 and a parameter storage unit 84.

The game situation data storage unit 82 stores game situation data describing the current situation of a soccer game, including, e.g., the data mentioned below.
(1) data on the current condition of the respective player characters belonging to the operating team and the opponent team, respectively;
(2) data on the current condition of the ball 56 (position, moving direction, moving speed, and so forth);
(3) data on the current condition of the virtual camera 58 (position, viewing direction, and so forth);
(4) data on the scores of the respective teams; and
(5) data on the elapsed period of time.

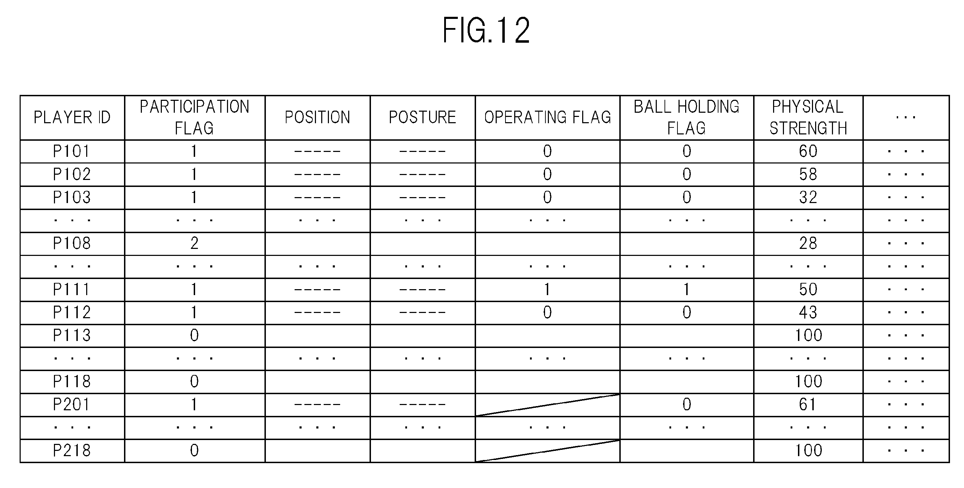

Fig. 12 shows one example of data (hereinafter referred to as "player condition data") describing the current condition of the respective player characters belonging to the operating team and the opponent team. The player condition data shown in Fig. 12 includes "player ID", "participation flag", "position", "posture", "operation target flag", "ball holding flag", "physical strength" fields, and so forth.

The "player ID" field is information uniquely identifying each of the player characters belonging to the operating team and the opponent team, respectively. In Fig. 12, "P101" to "P118" are player ID's of the player characters belonging to the operating team, while "P201" to "P218" are those belonging to the opponent team.

In the "participation flag" field, any of 0, 1, 2 is stored. The value "0" indicates that a player character has not participated in a match yet; the value "1" indicates that a player character is participating in a match; the value "2" indicates that a character participated in a match but is no longer participating in the match and has been exchanged with another player character.

The "position" field concerns the current position of a player character 52, 54; and the "posture" field concerns the current posture of a player character 52, 54.

The "operation target flag" field indicates whether or not a player character 52 is set as a user' s operation target, and takes a value of either 0 or 1. The value "0" indicates that a player character 52 is not currently set as a user's operation target; and the value "1" indicates that a player character 52 is currently set as a user's operation target.

The "ball holding flag" indicates whether or not a player character 52, 54 holds the ball 56, and takes a value of 0 or 1. The value "0" indicates that a player character 52, 54 does not currently hold the ball 56; and the value "1" indicates that a player character 52, 54 currently holds the ball 56.

In the "physical strength" field, a physical strength parameter is stored. A physical strength parameter concerns the remaining amount of physical strength of a player character. For example, the physical strength parameter takes a value between 0 and 100, and a higher physical strength parameter value means more physical strength of a player character, remaining. For example, the initial value of the physical strength parameter is set to 100 and the physical strength parameter value of a player character 52, 54 participating in a match gradually decreases as the player character 52, 54 takes any action, based on the content of the action. Alternatively, the physical strength parameter value of a player character 52, 54 participating in a match decreases every predetermined period of time (e.g., 1/60^{th} of a second). Note that when the physical strength parameter value becomes lower, the action ability (e.g., moving speed or response speed) of a player character 52, 54 becomes lower.

Note that a tiredness parameter indicating a degree of tiredness of a player character may be stored, instead of the physical strength parameter. A tiredness parameter value increases based on the elapsed period of time and/or action of a player character 52, 54. In this case, the higher the tiredness parameter value becomes, the lower the resulting action ability (e.g., moving speed or response speed) of a player character 52, 54.

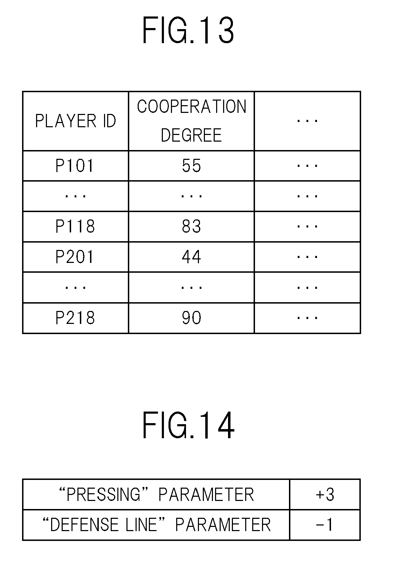

The parameter storage unit 84 stores various ability parameters of each of the player characters belonging to the operating team and the opponent team, respectively. Fig. 13 shows one example of player ability parameter data. The player ability parameter data shown in Fig. 13 contains a cooperation parameter value of each player character. A cooperation parameter indicates how smoothly a player character can carry out cooperative action (cooperative play) with another player character. For example, the cooperation parameter takes a value between 0 and 100, and a higher cooperation parameter value means a smoother cooperative action (cooperative play) being carried out with another player character.

The parameter storage unit 84 stores a strategy parameter concerning a strategy of the operating team. Fig. 14 shows one example of the strategy parameter data. The strategy parameter data shown in Fig. 14 contains the current values of the above-described "pressing" and "defense line" parameters.

The game situation data update unit 86 updates game situation data. Details of an operation of the game situation data update unit 86 are to be described later (see S117 in Fig. 16).

The display control unit 88 shows a game screen image 60 on the monitor 32. Specifically, a picture obtained by viewing the game space 40 from the virtual camera 58 is shown in the game screen image 60, as described above. In the game screen image 60, e.g., a picture showing a teammate player character acting based on the "pressing" and "defense line" parameter values is shown. In addition, the strategy parameter image 64 and the cursor image 70 are also shown in a game screen image 60.

The display control unit 88 changes the manner of displaying the cursor image 70, based on at least one of the first and second coordinate values of the cursor image 70 (central point 74). "The manner of displaying the cursor image 70" refers to, e.g., the size of the cursor image 70. In this embodiment, the display control unit 88 changes the distance between the circle images 72, depending on the first coordinate value of the cursor image 70 (central point 74) (see Figs. 4 to 6).

Note that the "the manner of displaying the cursor image 70" is not limited to the size of the cursor image 70. For example, for a rotating cursor image 70, the display control unit 88 may change the rotating speed of the cursor image 70, depending on at least one of the first and second coordinate values of the cursor image 70. That is, arrangement for enabling a user to instantly know, based on the rotation speed of the cursor image 70, how aggressively a teammate player character carries out press defense can be realized in this manner.

The coordinate value obtaining unit 90 obtains a first coordinate value corresponding to the first coordinate axis 66 and a second coordinate value corresponding to the second coordinate axis 68 in accordance with a direction designation operation or a position designation operation carried out by a user.

For example, the coordinate value obtaining unit 90 changes the first coordinate value and the second coordinate value of a reference position defined in the strategy parameter image 64, based on a direction designation operation. In this embodiment, the central point 74 of the cursor image 70 corresponds to the "reference position", while the cursor image 70 corresponds to a guide image for indicating the "reference position". The coordinate value obtaining unit 90 obtains the first and second coordinate values of the central point 74 of the cursor image 70.

The limit unit 92 limits the range of the first and/or second coordinate values/value available to be obtained by the coordinate value obtaining unit 90.

In this embodiment, the limit unit 92 controls the movable area 76 (immovable area 78) of the cursor image 70, based on the current situation of a game (game situation data). For example, the limit unit 92 controls the movable area 76 of the cursor image 70, based on the current situation (e.g., a physical strength parameter) of the player characters 52 belonging to the operating team and participating in a match (see Fig. 7). Also, for example, the limit unit 92 controls the movable area 76 of the cursor image 70, based on the scores/score of the operating team and/or opponent team (see Fig. 8). Further, for example, the limit unit 92 controls the movable area 76 of the cursor image 70, based on the ball holding situation of a player character 52 belonging to the operating team (see Fig. 9). Details of these operations of the limit unit 92 will be described later (see S106 in Fig. 15 to S115 in Fig. 16).

The limit unit 92 controls the movable area 76 of the cursor image 70, based on the ability of a player character 52 belonging to the operating team and participating in a match (see Fig. 10). Details of an operation of the limit unit 92 also will be described later (see S103 to S105 in Fig. 15).

The parameter update unit 94 updates the "pressing" and "defense line" parameters, based on the first coordinate value and the second coordinate value obtained by the coordinate value obtaining unit 90. The "pressing" parameter, correlated to the first coordinate axis 66, is updated based on the first coordinate value, and the "defense line" parameter, correlated to the second coordinate axis 68, is updated based on the second coordinate value.

In the following, a process to be carried out by the game device 10 will be described. Figs. 15 and 16 are flowcharts of a process to be carried out by the game device 10 every predetermined period (e.g., 1/60^{th} of a second). The microprocessor 14 carries out the process shown in Figs. 15 and 16 according to the program read from the optical disk 36, whereby the game situation data update unit 86, display control unit 88, coordinate value obtaining unit 90, limit unit 92, and parameter update unit 94 are realized.

As shown in Fig. 15, the microprocessor 14 (coordinate value obtaining unit 90) determines whether or not an operation for instructing movement of the cursor image 70 has been carried out (slot). Specifically, whether or not the second operating stick has been tilted is determined.

When an operation for instructing movement of the cursor image 70 has been carried out, the microprocessor 14 (coordinate value obtaining unit 90) updates the position (x, y) of the cursor image 70 (central point 74) , based on the content of the operation (S102). Note that "x" refers to a first coordinate value, and "y" refers to a second coordinate value. At S102, the position (x, y) of the cursor image 70 is updated to a position displaced by a predetermined distance in a direction corresponding to the direction in which the second operating stick is tilted. The position (x, y) of the cursor image 70 is stored in the main memory 16.

When the process at S102 is carried out or when it is determined at S101 that no operation for instructing movement of the cursor image 70 has been carried out, the microprocessor 14 (limit unit 92) obtains the cooperation parameter value of the operating team (S103). At this S103, the cooperation parameters of the player characters 52 belonging to the operating team and participating in a match are read from the player ability parameter data (see Fig. 13), and a statistical value (average value here) of the cooperation parameters is obtained as a cooperation parameter of the operating team.

Thereafter, the microprocessor 14 (limit unit 92) obtains a movable area 76 of the cursor image 70 corresponding to the cooperation parameter value obtained at S103 (S104).

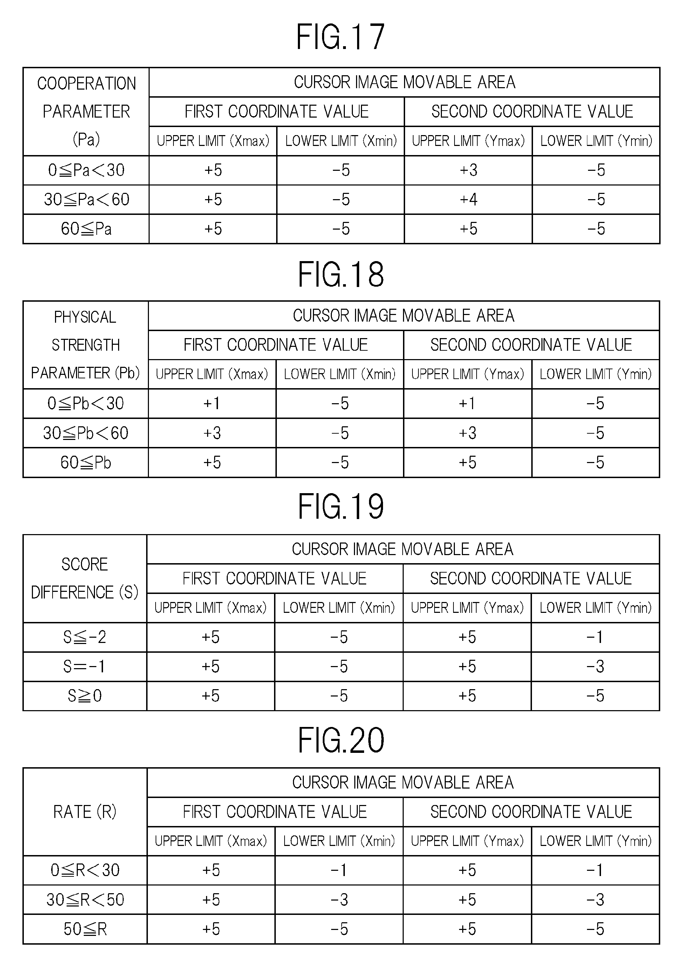

At S104, movable area data, such as is shown in e.g., Fig. 17, is read. The movable area data shown in Fig. 17 is data correlating a condition concerning a cooperation parameter value and information concerning the movable area 76 of the cursor image 70. In Fig. 17, as information concerning the movable area 76 of the cursor image 70, the upper limit (Xmax) and lower limit (Xmin) of the first coordinate value and the upper limit (Ymax) and lower limit (Ymin) of the second coordinate value are held.

Then, at S104, the upper limit (Xmax) and lower limit (Xmin) of the first coordinate value, corresponding to the cooperation parameter value obtained at S103, and the upper limit (Ymax) and lower limit (Ymin) of the second coordinate value, corresponding to the cooperation parameter value obtained at S103, are obtained, based on the movable area data shown in Fig. 17.

After the process at S104, the microprocessor 14 (limit unit 92) carries out a modification process relative to the position (x, y) of the cursor image 70 (S105). At S105, whether or not the position (x, y) of the cursor image 70 is in the movable area 76 obtained at S104 is determined. When the position (x, y) of the cursor image 70 is not in the movable area 76, the position (x, y) of the cursor image 70 is modified to a position in the movable area 76.

Specifically, when the first coordinate value (x) of the cursor image 70 is larger than the upper limit (Xmax) obtained at S104, the first coordinate value (x) is modified to the upper limit (Xmax). Meanwhile, when the first coordinate value (x) of the cursor image 70 is smaller than the lower limit (Xmin) obtained at S104, the first coordinate value (x) is modified to the lower limit (Xmin).

Similarly, when the second coordinate value (y) of the cursor image 70 is larger than the upper limit (Ymax) obtained at S104, the second coordinate value (y) is modified to the upper limit (Ymax). Meanwhile, when the second coordinate value (y) of the cursor image 70 is smaller than the lower limit (Ymin) obtained at S104, the second coordinate value (y) is modified to the lower limit (Ymin).

After the process at S105, the microprocessor 14 (limit unit 92) obtains a physical strength parameter value of the operating team (S106). At S106, physical strength parameters of the player characters 52 belonging to the operating team and participating in a match are read from the player condition data (see Fig. 12), and a statistical value (average value here) of the physical strength parameters is obtained as a physical strength parameter of the operating team.

Thereafter, the microprocessor 14 (limit unit 92) obtains the movable area 76 of the cursor image 70, corresponding to the physical strength parameter value obtained at S106 (S107).

Specifically, at S107, movable area data, such as is shown in, e.g., Fig. 18, is read. The movable area data shown in Fig. 18 is data correlating a condition concerning a physical strength parameter value and information concerning the movable area 76 of the cursor image 70. At S107, the upper limit (Xmax) and lower limit (Xmin) of the first coordinate value, corresponding to the physical strength parameter value obtained at S106, and the upper limit (Ymax) and lower limit (Ymin) of the second coordinate value, corresponding to the physical strength parameter value obtained at S106, are obtained at S107, based on the movable area data shown in Fig. 18.

After the process at S107, the microprocessor 14 (limit unit 92) carries out a modification process with respect to the position (x, y) of the cursor image 70 (S108). At S108, whether or not the position (x, y) of the cursor image 70 is in the movable area 76 obtained at S107 is determined. When the position (x, y) of the cursor image 70 is not in the movable area 76, the position (x, y) of the cursor image 70 is modified to a position in the movable area 76. This process is carried out similarly to S105.

After the process at S108, the microprocessor 14 (limit unit 92) determines whether or not the remaining period of time of the match is shorter than a reference period (S109). With a remaining period of the match being shorter than a reference period, the microprocessor 14 (limit unit 92) obtains a difference in score between the operating team and the opponent team (S110).

Thereafter, the microprocessor 14 (limit unit 92) obtains the movable area 76 of the cursor image 70 corresponding to the difference in score obtained at S110 (S111).

At S111, movable area data, such as is shown in Fig. 19, for example, is read. The movable area data shown in Fig. 19 is data correlating a condition concerning a score difference and information concerning the movable area 76 of the cursor image 70. Note that a score difference (S) in Fig. 19 refers to a value obtained by subtracting the score of the opponent team from the score of the operating team. At S111, the upper limit (Xmax) and lower limit (Xmin) of the first coordinate value corresponding to the score difference obtained at S110 and the upper limit (Ymax) and lower limit (Ymin) of the second coordinate value corresponding to the score difference obtained at S110 are obtained at S111, based on the movable area data shown in Fig. 19.

After the process at S111, the microprocessor 14 (limit unit 92) carries out a modification process relative to the position (x, y) of the cursor image 70 (S112). At S112, whether or not the position (x, y) of the cursor image 70 is in the movable area 76 obtained at S111 is determined. When the position (x, y) of the cursor image 70 is not in the movable area 76, the position (x, y) of the cursor image 70 is modified to a position in the movable area 76. This process is carried out similarly to S105.

After the process at S112, the microprocessor 14 (limit unit 92) obtains the rate of ball possession of the operating team during the last predetermined period (S113). At S113, a ball holding period (T) of the operating team during a period from a time prior to the current time by a predetermined period of time (Tc) to the current time is obtained, and T/Tc is calculated.

Thereafter, the microprocessor 14 (limit unit 92) obtains the movable area 76 of the cursor image 70 corresponding to the rate obtained at S113 (S114).

At S114, movable area data, such as is shown in Fig. 20, for example, is read. The movable area data shown in Fig. 20 is data correlating a condition concerning the rate (unit: %) and information concerning the movable area 76 of the cursor image 70. That is, the upper limit (Xmax) and lower limit (Xmin) of the first coordinate value, corresponding to the rate obtained at S113, and the upper limit (Ymax) and lower limit (Ymin) of the second coordinate value, corresponding to the rate obtained at S113, are obtained at S114, based on the movable area data shown in Fig. 20.

After the process at S114, the microprocessor 14 (limit unit 92) carries out a modification process relative to the position (x, y) of the cursor image 70 (S115). At S115, whether or not the position (x, y) of the cursor image 70 is in the movable area 76 obtained at S114 is determined. When the position (x, y) of the cursor image 70 is not in the movable area 76, the position (x, y) of the cursor image 70 is modified to a position in the movable area 76. This process is carried out similarly to S105.

After the process at S115, the microprocessor 14 (parameter update unit 94) updates the "pressing" parameter and "defense line" parameter, based on the position (x, y) of the cursor image 70 (S116). At S116, the "pressing" parameter value is updated to a value based on the first coordinate value (x) of the cursor image 70, and the "defense line" parameter value is updated to a value based on the second coordinate value (y) of the cursor image 70.

Thereafter, the microprocessor 14 (game situation data update unit 86) updates the game situation data (S117). At S117, for example, the condition (position, posture, and so forth) of the player character 52 set as a user's operation target is updated based on a user's operation (e.g., the state of first operating stick being operated). Further, for example, the condition of a teammate player character is also updated based on an action control algorithm and a strategy parameter. That is, the condition of a teammate player character is updated such that the teammate player character acts based on a strategy parameter.

At S117, the condition of a player character 54 belonging to the opponent team is updated based on an action control algorithm. The condition of, for example, the ball 56 and the virtual camera 58 is also updated. Further, the period of time elapsed and the scores of the respective teams are also updated, and players are exchanged according to an instruction by a user.

Thereafter, the microprocessor 14 (display control unit 88) updates the game screen image 60 (S118). At S118, initially, a view field image showing a picture obtained by viewing the game space 40 from the virtual camera 58 is created in the VRAM, based on the game situation data. Thereafter, an image showing a score or a period of time elapsed is rendered in a predetermined position in the view field image.

In addition, the strategy parameter image 64 is rendered in a predetermined position in the view field image. Still further, the cursor image 70 is rendered based on the position (x, y) thereof. That is, a plurality of kinds of cursor images 70 with different distances between the circle images 72 are recorded in advance on the optical disk 36, and a condition concerning the position (x, y) of the cursor image 70 is recorded being correlated to each of the plurality of kinds of cursor images 70. Thus, a cursor image 70 correlated to the current position (x, y) of the cursor image 70 is read from the optical disk 36, based on the content recorded on the optical disk 36, and rendered.

Note that data correlating a condition concerning the position (x, y) of the cursor image 70 and display manner information concerning the manner of displaying the cursor image 70 (the distance between the circle images 72 here) may be recorded on the optical disk 36, so that display manner information correlated to the current position (x, y) of the cursor image 70 may be obtained based on the data, and the manner of displaying the cursor image 70 may be determined based on the display manner information.

In the above described manner, a game screen image 60, such as is shown in Fig. 3, for example, is rendered in the VRAM. The game screen image 60 rendered in the VRAM is shown on the monitor 32.

In the above described game device 10, the strategy parameter image 64 is shown in a game screen image 60. With the strategy parameter image 64 shown, a user, while operating the player character 52 set as an operation target, using the first operating stick, can set two strategy parameters ("pressing" parameter and "defense line" parameter) by tilting the second operating stick (i.e., performing a direction designation operation). As described above, according to the game device 10, a user interface for enabling a user to relatively readily set two strategy parameters ("pressing" parameter and "defense line" parameter) while playing a game can be realized.

Note that the present invention is not limited to the above-described embodiment.
(1) For example, the strategy parameter is not limited to the "press defense" parameter and a "defense line" parameter. Another example of a strategy parameter may include, e.g., an "attack-conscious" parameter indicating how aggressively an attack is made, a "defense-conscious" parameter indicating how important defense is considered, and so forth.
(2) As described above, when the movable area 76 becomes smaller (i.e., the immovable area 78 becomes larger) due to change in current game situation or the like to an extent that the cursor image 70 is resultantly located in the immovable area 78, the cursor image 70 is forcibly moved to the movable area 76 (see S105 and S108 in Fig. 15 and S112 and S115 in Fig. 16). In this case, the original position of the cursor image 70 (position before the forcible movement) may be stored in the main memory 16. The strategy parameter image 64 may include an image for indicating the original position of the cursor image 70.

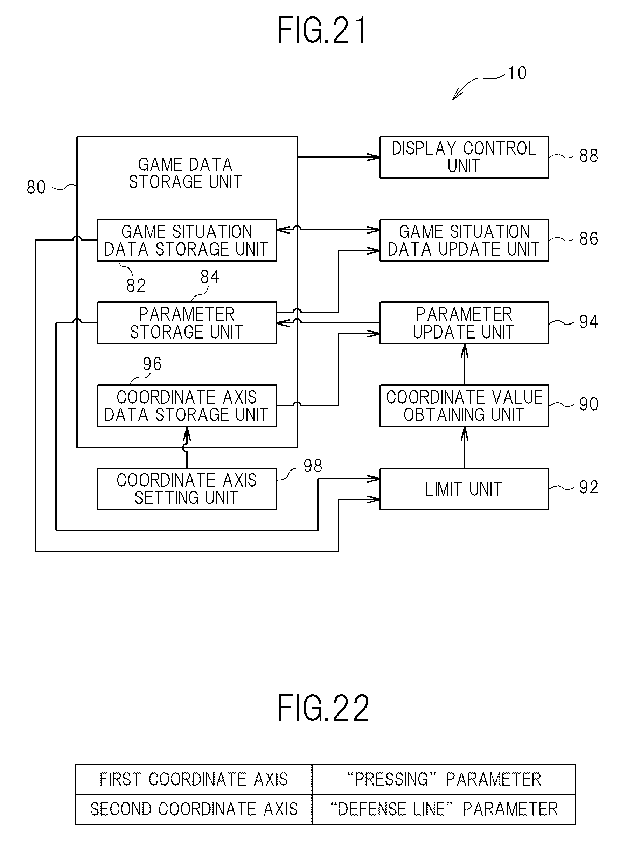

Then, when the movable area 76 becomes larger due to change in current game situation or the like after the forcible movement of the cursor image 70 to the movable area 76, the cursor image 70 may be moved based on the original position thereof (position before the forcible movement). For example, the cursor image 70 may be automatically moved so as to get closer to the original position thereof (position before the forcible movement).
(3) For example, the game device 10 may include a coordinate axis setting unit for determining the type of a strategy parameter to be correlated to the first coordinate axis 66 and/or second coordinate axis 68. Fig. 21 is a functional block diagram of the game device 10 in this case. The functional block diagram shown in Fig. 21 differs from the functional block diagram shown in Fig. 11 in that a coordinate axis data storage unit 96 and a coordinate axis setting unit 98 are included. In the following, the functions of the coordinate axis data storage unit 96 and the coordinate axis setting unit 98 will be mainly described.

The coordinate axis data storage unit 96 stores coordinate axis data describing a correlation relationship between the first coordinate axis 66 and second coordinate axis 68 and a type of a strategy parameter. Fig. 22 shows one example of the coordinate axis data.

The coordinate axis setting unit 98 selects at least one of the type of a strategy parameter to be correlated to the first coordinate axis 66 and another type of a strategy parameter to be correlated to the second coordinate axis 68, based on a selection operation carried out by a user, from among a plurality of kinds of strategy parameters. For example, the coordinate axis setting unit 98 shows on the monitor 32 a screen image for encouraging a user to select one type of a strategy parameter to be correlated to the first coordinate axis 66, and another strategy parameter to be correlated to the second coordinate axis 68, from among the plurality of kinds of strategy parameters. Then, the coordinate axis setting unit 98 updates the coordinate axis data (see Fig. 22), based on the content of selection by a user.

In the above described manner, a user can select a strategy parameter which can be set via the strategy parameter image 64.

Alternatively, the coordinate axis setting unit 98 may select at least one of the type of a strategy parameter to be correlated to the first coordinate axis 66 and another strategy parameter to be correlated to the second coordinate axis 68, based on the current game situation, from among a plurality of strategy parameters.

In this case, for example, a game situation condition concerning game situation is stored being correlated to a respective strategy parameter. Then, when, for example, an "attack-conscious" parameter is correlated to neither the first coordinate axis 66 nor the second coordinate axis 68, the coordinate axis setting unit 98 determines whether or not the current game situation satisfies a game situation condition stored being correlated to the "attack-conscious" parameter, and when the current game situation satisfies the game situation condition, correlates the "attack-conscious" parameter to either the first coordinate axis 66 or the second coordinate axis 68.

In the above described manner, a strategy parameter which can be set via the strategy parameter image 64 can be changed depending on the current game situation.

Further alternatively, the coordinate axis setting unit 98 may determine at least one of the type of a strategy parameter to be correlated to the first coordinate axis 66 and another strategy parameter to be correlated to the second coordinate axis 68, based on the current condition (e.g., viewing direction 58a) of the virtual camera 58.

For example, the coordinate axis setting unit 98 may determine, based on the relationship between the viewing direction 58a of the virtual camera 58 and the extended direction of the touch line 46, to which of the first coordinate axis 66 and the second coordinate axis 68 the "defense line" parameter is to be correlated.

Specifically, when the viewing direction 58a of the virtual camera 58 intersects the extended direction of the touch line 46 substantially vertically (XW axial direction in Fig. 2), the coordinate axis setting unit 98 causes the "defense line" parameter to be correlated to the first coordinate axis 66 (abscissas). That is, when the viewing direction 58a of the virtual camera 58 intersects the extended direction of the touch line 46 substantially vertically, the extended direction of the touch line 46 is substantially coincident with the lateral direction of the game screen image 74. Also, a direction related to the "defense line" parameter, that is, a farther/closer direction of a defense line, is coincident with the extended direction of the touch line 46. Therefore, regarding this point, with the above, the farther/closer direction of the defense line and the coordinate axial direction related to the "defense line" parameter are resultantly substantially coincident with each other in the lateral direction. This makes it easier for a user to set a "defense line" parameter.

Similarly, when the viewing direction 58a of the virtual camera 58 is substantially coincident with the extended direction of the touch line 46, the coordinate axis setting unit 98 causes the "defense line" parameter to be correlated to the second coordinate axis 68 (ordinates). That is, when the viewing direction 58a of the virtual camera 58 is substantially coincident with the extended direction of the touch line 46, the extended direction of the touch line 46 is substantially coincident with the vertical direction in the game screen image 60. Therefore, regarding this point, with the above, the farther/closer direction of the defense line and the coordinate axial direction related to the "defense line" parameter are resultantly substantially coincident with each other in the vertical direction. This makes it easier for a user to set a "defense line" parameter. (4) For example, the display control unit 88 may determine whether or not a player character satisfying a predetermined condition among those belonging to the operating team is participating in the match, and limit display of the strategy parameter image 64 based on the result of determination.

Here, a "player character satisfying a predetermined condition" may be, e.g., a player character having a predetermined ability. Alternatively, a "player character satisfying a predetermined condition" may be, e.g., a player character having a predetermined ability parameter (e.g., parameter indicating degree of comprehension of strategy) within a predetermined value range.

Specifically, the display control unit 88 shows the strategy parameter image 64 when any player character satisfying the above-described predetermined condition is participating in a match, but does not show the strategy parameter image 64 when a player character satisfying the above described predetermined condition is not participating in a match. With the above, the strategy parameter image 64 can be displayed only when a player character having a good comprehension of strategy among those belonging to the operating team is participating in the match. (5) For example, the limit unit 92 may determine whether or not a player character satisfying a predetermined condition among those belonging to the operating team is participating in the match, and control the movable area 76 (immovable area 78) of the cursor image 70, based on the result of determination.

Here, a "player character satisfying a predetermined condition" is, e.g., a player character having predetermined ability. Alternatively, a "player character satisfying a predetermined condition" is, for example, a player character having a predetermined ability parameter (e.g., a parameter indicating degree of comprehension of strategy) within a predetermined value range.

For example, when any player character satisfying the above-described predetermined condition is participating in a match, a larger movable area 76 is ensured for the cursor image 70, compared to a case in which a player character satisfying the above described predetermined condition is not participating in a match. With the above, a larger movable area 76 can be ensured for the cursor image 70 when a player character having a good comprehension of strategy is participating in a match, compared to a case in which a player character having a good comprehension of strategy is not participating in a match.
(6) For example, the coordinate value obtaining unit 90 may move the first coordinate axis 66 and the second coordinate axis 68, based on a direction designation operation (operation carried out using the second operating stick), while keeping the central point 74 of the cursor image 70 (reference position) fixed at a predetermined position (e.g., central position) in the strategy parameter image 64 all the time, and obtain the first and second coordinate values of the central point 74 of the cursor image 70.

With the above also, the first coordinate value and second coordinate value of the cursor image 70 (central point 74) will change, based on a direction designation operation carried out by a user, so that the first coordinate value and second coordinate value of the cursor image 70 (central point 74) will change according to a direction designation operation by a user. This makes it possible for a user to set the "pressing" parameter and "defense line" parameter by carrying out a direction designation operation.
(7) For example, in a game device having a touch panel for outputting position information in accordance with a position pressed by a user, the coordinate value obtaining unit 90 may obtain the first coordinate value and second coordinate value of a position specified by the position information (in other words, a position pressed by a user) when the position specified by the position information is included in the strategy parameter image 64. That is, arrangement may be made in this manner so that a user can set the "pressing" parameter and "defense line" parameter by carrying out a pressing operation (position designation operation).
(8) For example, the game space may be a two-dimensional game space in which the position or the like of a player character or a ball is managed using a two dimensional coordinate element.
(9) For example, the present invention can be applied to a sport game other than a soccer game (e.g., basket ball game, ice hockey game, baseball game, or the like). The present invention can be applied to a game other than a sport game.

## Claims

1. A game device, comprising:
parameter storage means for storing a first parameter and a second parameter, both parameters being a basis for action control of a game character;
display control means for displaying an image in which a first coordinate axis corresponding to the first parameter and a second coordinate axis corresponding to the second parameter are shown in a game screen image showing the game character acting based on the first parameter and the second parameter;
coordinate value obtaining means for obtaining a first coordinate value corresponding to the first coordinate axis and a second coordinate value corresponding to the second coordinate axis in accordance with a direction designation operation or a position designation operation; and
parameter update means for updating the first parameter and the second parameter, based on the first coordinate value and the second coordinate value.

2. The game device according to claim 1, further comprising means for limiting a range/ranges of the first coordinate value or/and the second coordinate value which is/are possibly obtained by the coordinate value obtaining means, based on a current game situation.

3. The game device according to claim 1, wherein
the coordinate value obtaining means
includes means for changing the first coordinate value and the second coordinate value of a reference position defined in the image, based on a direction designation operation, and
obtains the first coordinate value and the second coordinate value of the reference position.

4. The game device according to claim 3, wherein
the display control means includes
means for displaying a guide image for indicating the reference position in a position based on the reference position, and
means for changing a manner of displaying the guide image, based on at least one of the first coordinate value and the second coordinate position of the reference position.

5. The game device according to claim 4, wherein
the guide image includes a plurality of element images, and
the display control means includes means for changing a distance between the plurality of element images, based on at least one of the first coordinate value and the second coordinate value of the reference position.

6. The game device according to claim 1, further comprising a touch panel for outputting position information in accordance with a press operation,
wherein
the coordinate value obtaining means includes means, when a position specified by the position information output from the touch panel is included in the image, for obtaining the first coordinate value and the second coordinate value of the position specified by the position information.

7. The game device according to claim 1, further comprising coordinate axis setting means for selecting at least one of the first parameter to be correlated to the first coordinate axis and the second parameter to be correlated to the second coordinate axis, based on a selection operation, from among a plurality of parameters.

8. The game device according to claim 1, further comprising coordinate axis setting means for selecting at least one of the first parameter to be correlated to the first coordinate axis and the second parameter to be correlated to the second coordinate axis, based on current situation of a game, from among a plurality of parameters.

9. The game device according to claim 1, wherein
a game imitating a sport match between an operating team operated by a user and an opponent team is carried out,
action of at least one or more of player characters belonging to the operating team is controlled based on the first parameter and the second parameter, and
the display control means includes means for determining whether or not a player character satisfying a predetermined condition among the player characters belonging to the operating team is participating in the match, and limits display of the image, based on a result of determination.

10. The game device according to claim 1, wherein
a game imitating a sport match between an operating team operated by a user and an opponent team is carried out,
action of at least one or more of player characters belonging to the operating team is controlled based on the first parameter and the second parameter, and
the game device further comprises
means for determining whether or not a player character satisfying a predetermined condition among the player characters belonging to the operating team is participating in the match, and
means for limiting a range/ranges of the first coordinate value or/and the second coordinate value which is/are possibly obtained by the coordinate value obtaining means, based on a result of determination.

11. A control method for controlling a game device, comprising:
a step of reading content stored in parameter storage means for storing a first parameter and a second parameter, both parameters being a basis for action control of a game character;
a display control step of displaying an image in which a first coordinate axis corresponding to the first parameter and a second coordinate axis corresponding to the second parameter are shown in a game screen image showing the game character acting based on the first parameter and the second parameter;
a coordinate value obtaining step of obtaining a first coordinate value corresponding to the first coordinate axis and a second coordinate value corresponding to the second coordinate axis in accordance with a direction designation operation or a position designation operation; and
a parameter update step of updating the first parameter and the second parameter, based on the first coordinate value and the second coordinate value.

12. A program for causing a computer to function as:
means for reading content stored in parameter storage means for storing a first parameter and a second parameter, both parameters being a basis for action control of a game character;
display control means for displaying an image in which a first coordinate axis corresponding to the first parameter and a second coordinate axis corresponding to the second parameter are shown in a game screen image showing the game character acting based on the first parameter and the second parameter;
coordinate value obtaining means for obtaining a first coordinate value corresponding to the first coordinate axis and a second coordinate value corresponding to the second coordinate axis in accordance with a direction designation operation or a position designation operation; and
parameter update means for updating the first parameter and the second parameter, based on the first coordinate value and the second coordinate value.

13. A computer readable information storage medium storing a program for causing a computer to function as:
means for reading content stored in parameter storage means for storing a first parameter and a second parameter, both parameters being a basis for action control of a game character;
display control means for displaying an image in which a first coordinate axis corresponding to the first parameter and a second coordinate axis corresponding to the second parameter are shown in a game screen image showing the game character acting based on the first parameter and the second parameter;
coordinate value obtaining means for obtaining a first coordinate value corresponding to the first coordinate axis and a second coordinate value corresponding to the second coordinate axis in accordance with a direction designation operation or a position designation operation; and
parameter update means for updating the first parameter and the second parameter, based on the first coordinate value and the second coordinate value.
